# FASCICULE DE BREVET EUROPEEN

(11) **EP 3 735 373 B1**
(45) Date de publication et mention de la délivrance du brevet: **11.03.2026**
(21) Numéro de dépôt: 18842638.1
(22) Date de dépôt: 21.12.2018
(51) Int. Cl.: B62H 3/00, B60L 53/16, B62K 3/00

(54) **TROTTINETTE APTE À UN STOCKAGE COMPACT**
ZUR KOMPAKTEN LAGERUNG GEEIGNETER ROLLER
HUMAN-POWERED VEHICLE SUITABLE FOR COMPACT STORAGE

(30) Priorité: 05.01.2018 FR 1850087; 13.02.2018 FR 1851195
(43) Date de publication de la demande: 11.11.2020
(73) Titulaire: Birota, 92170 Vanves (FR)
(72) Inventeur: CARREEL, Eric, 92190 MEUDON (FR); LE RODALLEC, Arnaud, 75006 Paris (FR); SAUVAGEOT, Pierre, 78210 Saint Cyr L'Ecole (FR); RETIERE, Thibault, 44100 Nantes (FR)
(74) Mandataire: Yes My Patent
(86) Numéro de dépôt international: PCT/FR2018/053519
(87) Numéro de publication internationale: WO 2019/135043

(56) Documents cités:
- EP-A1- 2 955 092
- WO-A1-2016/147599
- CN-A- 105 644 670
- CN-B- 103 803 004
- CN-U- 205 396 412
- DE-A1- 102007 038 243
- DE-A1- 102012 204 915
- KR-A- 20110 007 466
- KR-A- 20110 007 553
- US-A1- 2004 069 543
- US-A1- 2010 228 405
- US-A1- 2013 186 702
- US-A1- 2014 090 916

## Description

### DOMAINE TECHNIQUE DE L'INVENTION

Le domaine de l'invention est celui des moyens de transport.

Plus précisément, l'invention concerne une structure d'une trottinette apte à un stockage compact.

L'invention trouve notamment des applications pour stocker de manière compacte une flotte de trottinette et plus spécifiquement une flotte de trottinette électrique. Dans le cadre d'un service de trottinette partagée, ce stockage peut notamment être effectué en un ou plusieurs lieux d'un milieu urbain.

### ÉTAT DE LA TECHNIQUE

Il est connu de l'art antérieur des techniques pour stocker une flotte de trottinette en installant notamment des bornes individuelles accueillant chacune une trottinette de la flotte.

L'inconvénient principal de l'installation de ces bornes individuelles est de nécessiter l'installation d'une multitude de bornes fixes, ce qui implique de monopoliser une grande surface pour stocker la flotte. Il convient de souligner que dans le cadre d'un système partagé, le nombre de bornes est généralement très supérieur au nombre de trottinettes déployées afin de permettre à un utilisateur d'avoir plus de chance de trouver une place disponible à son point d'arrivée.

En outre, lorsque la flotte comprend des trottinettes électriques, chaque borne est généralement alimentée électriquement afin de pouvoir recharger une batterie d'une trottinette électrique, ce qui complexifie l'installation des bornes.

Aucun des systèmes actuels ne permet de répondre simultanément à tous les besoins requis, à savoir de proposer une technique qui permette de densifier le stockage d'une flotte de trottinettes, et notamment de trottinettes électriques, tout en ne nécessitant qu'un minimum d'installation. Le document DE 10 2007 038243 A1 décrit une structure d'une trottinette selon le préambule de la revendication 1.

### EXPOSÉ DE L'INVENTION

La présente invention vise à remédier à tout ou partie des inconvénients de l'état de la technique cités ci-dessus.

A cet effet, la présente invention vise, selon un premier aspect, une structure d'un véhicule à propulsion humaine.

Un véhicule à propulsion humaine peut être par exemple une bicyclette, également appelée vélo, un tricycle, une trottinette, une voiture à pédale, un pédalo, etc. Généralement, la propulsion humaine est assurée par un dispositif de pédalage utilisé par un individu, le dispositif de pédalage comprenant généralement deux manivelles entraînant l'arbre de pédalier en rotation. Ceci est notamment le cas pour un vélo, un tricycle, une voiture à pédale ou un pédalo.

Préférentiellement, le véhicule à propulsion humaine est une trottinette qui comprend un plateau, deux roues, une potence et un guidon.

La trottinette peut indifféremment comprendre ou non une assistance électrique à la propulsion, Lorsqu'elle comprend une telle assistance, elle sera appelée par la suite « trottinette électrique ».

Pour une trottinette, la propulsion humaine s'effectue généralement par l'individu ayant un pied posé sur le plateau, généralement plan, présentée par la structure de la trottinette, l'autre pied servant à pousser le sol pour propulser la trottinette.

Il convient de souligner qu'une trottinette électrique, bien qu'elle comprenne un moteur électrique permettant de la propulser la majeure partie du temps, est également un véhicule à propulsion humaine. En effet, une trottinette électrique peut être propulsée par un individu se servant de l'une de ses jambes pour faire avancer la trottinette en poussant le sol avec le pied associé. En particulier, certains modèles nécessitent une telle poussé humaine pour « amorcer » la mise en route du moteur électrique d'assistance.

La structure peut être notamment un cadre ou un châssis.

Selon l'invention, la structure du véhicule comprend au moins un jeu d'accouplement comprenant des moyens d'accroche et des moyens d'accroche complémentaire, les moyens d'accroche coopérant avec des moyens d'accroche complémentaire présentés par un véhicule similaire ou par une borne fixe.

En d'autres termes, la structure du véhicule comprend au moins un jeu d'accouplement comprenant des moyens d'accroche et des moyens d'accroche complémentaire, les moyens d'accroche étant aptes à s'accoupler à des moyens d'accroche complémentaire présentés par un deuxième véhicule similaire ou par une borne.

Ainsi, l'espace entre deux véhicules accouplés ensemble peut être réduit au minimum voire nul, ce qui permet de réaliser un stockage de véhicules qui soit compact.

En outre, l'accouplement des moyens d'accroche et des moyens d'accroche complémentaire de deux jeux d'accouplements distincts, l'un correspondant à celui du véhicule et l'autre à celui du deuxième véhicule ou de la borne, permet généralement de créer une liaison mécanique solide entre les deux véhicules ou entre le véhicule et la borne. Dans le cas d'une bicyclette ou d'une trottinette, cette liaison mécanique permet de les maintenir en position, généralement verticale, et d'éviter que celles-ci ne basculent. Il n'est alors pas nécessaire d'utiliser une béquille pour créer un troisième point d'appui avec le sol pour les maintenir sensiblement verticalement.

Selon l'invention, les moyens d'accroche et les moyens d'accroche complémentaire d'un même jeu d'accouplement sont positionnés latéralement dans un plan perpendiculaire à un axe longitudinal dudit véhicule, ou à l'axe de déplacement principal dudit véhicule.

Ainsi, deux véhicules accouplés sont alignés selon un axe perpendiculaire à l'axe longitudinal ou à l'axe de déplacement.

Il convient de souligner que lorsque le véhicule est une bicyclette, la bicyclette présente un plan médian longitudinal correspondant sensiblement à un plan de symétrie principal de la bicyclette. Lors du déplacement de la bicyclette en ligne droite, le plan médian longitudinal est vertical et parallèle aux roues de la bicyclette. Les moyens d'accroche et les moyens d'accroche complémentaire sont déportés latéralement par rapport au plan médian longitudinal.

De manière similaire, lorsque le véhicule est une trottinette, la trottinette présente également un plan médian longitudinal correspondant à un plan de symétrie principal de la trottinette. Lors du déplacement de la trottinette en ligne droite, le plan médian longitudinal est vertical et parallèle aux roues de la trottinette. Les moyens d'accroche et les moyens d'accroche complémentaire sont déportés latéralement par rapport au plan médian longitudinal.

Selon l'invention, les moyens d'accroche et les moyens d'accroche complémentaire sont disposés de part et d'autre dudit plan, afin d'accoupler plusieurs véhicules deux à deux pour former un ensemble compact. Ainsi, l'ensemble de véhicules accouplés présentent des moyens d'accroche ou des moyens d'accroche complémentaire afin qu'un autre véhicule puisse s'accoupler à l'ensemble.

Selon l'invention, la distance entre les moyens d'accroche et les moyens d'accroche complémentaire d'un même jeu d'accouplement est inférieure à l'envergure dudit véhicule.

Ainsi, il est possible d'avoir un stockage très compact. Dans le cas d'une bicyclette ou d'une trottinette, l'envergure correspond à la distance entre les extrémités du guidon de la bicyclette ou de la trottinette. En d'autres termes, dans le cas d'une bicyclette ou d'une trottinette, l'envergure correspond à la largeur de la bicyclette ou de la trottinette.

Dans le cas où les moyens d'accroche comprennent une première surface apte à venir en butée d'une deuxième surface présentée par les moyens d'accroche complémentaire présentés par un deuxième véhicule similaire ou par la borne, la distance entre les moyens d'accroche et les moyens d'accroche complémentaire correspond à la distance entre la première surface et la deuxième surface d'un même jeu d'accouplement.

Il convient de souligner que la première surface et la deuxième surface d'un même jeu sont parallèles entre elles et préférentiellement parallèles à un plan médian du véhicule, voire au plan médian longitudinal dans le cas d'une bicyclette ou d'une trottinette.

Il convient également de souligner que la distance entre les moyens d'accroche et les moyens d'accroche complémentaire d'un même jeu définit le pas entre chaque véhicule d'un accouplement comprenant une pluralité de véhicules accouplés.

Dans le cas d'une bicyclette, la distance entre les moyens d'accroche et les moyens d'accroche complémentaire d'un même jeu d'accouplement peut être avantageusement supérieure à la largeur du pédalier au niveau des deux manivelles, une pédale d'une bicyclette pouvant éventuellement entrer en contact avec une pédale d'une seconde bicyclette, dès lors que ce contact ne provoque qu'un effet d'entrainement du second pédalier par le premier pédalier, sans pour autant bloquer la rotation des deux pédaliers.

Avantageusement, la distance entre les moyens d'accroche et les moyens d'accroche complémentaire d'un même jeu peut être avantageusement supérieure à la largeur du pédalier en tenant compte des pédales afin que les pédales puissent librement tourner lorsque deux bicyclettes sont accouplées.

Dans le cas d'une trottinette, la distance entre les moyens d'accroche et les moyens d'accroche complémentaire d'un même jeu d'accouplement est généralement supérieure à la largeur du plateau sur laquelle l'individu pose au moins un de ses pieds.

Selon l'invention, la structure du véhicule comprend au moins deux jeux d'accouplement.

Ainsi, deux véhicules peuvent être plus facilement accouplés parallèlement l'un par rapport à l'autre.

En outre, les deux jeux d'accouplement, une fois accouplées à deux autres jeux d'accouplement d'une autre structure similaire ou d'une borne, permettent d'augmenter la stabilité mécanique conférée par l'accouplement.

Avantageusement, au moins deux jeux d'accouplement sont placés à des hauteurs différentes par rapport au plateau de la trottinette.

Ainsi, l'ensemble de trottinettes accouplées est plus stable et risque moins de basculer.

Il convient de souligner que généralement un des deux jeux d'accouplement est disposé sensiblement dans le plan du plateau, par exemple au niveau de la roue arrière de la trottinette, ce qui correspond à une hauteur par rapport au plateau quasiment nulle. Le plateau étant généralement proche du sol afin que l'individu puisse facilement monter dessus, le deuxième jeu d'accouplement est préférentiellement en hauteur, sur la potence de la trottinette, offrant ainsi un point de stabilité mécanique pour la trottinette lorsqu'elle est accouplée à une autre trottinette ou à une borne.

Dans des modes de réalisation particuliers de l'invention, les moyens d'accroche complémentaire comprennent au moins un aimant coopérant avec au moins un aimant compris par les moyens d'accroche.

Les deux aimants peuvent avantageusement être de polarité opposée.

Dans des modes de réalisation particuliers de l'invention, les moyens d'accroche complémentaire comprennent au moins un aimant permanent coopérant avec au moins un élément métallique présenté par les moyens d'accroche.

L'élément métallique peut notamment être une tôle métallique.

Dans des modes de réalisation particuliers de l'invention, les moyens d'accroche complémentaire comprennent également un électroaimant apte à créer un champ magnétique opposé au champ magnétique de l'aimant permanent.

Ainsi, le désaccouplement de deux bicyclettes ou de deux trottinettes peut être facilité.

Avantageusement, le véhicule peut comprendre des moyens de détection de la préhension par un individu.

Ainsi, lorsqu'une préhension est détectée, l'électroaimant est commandé pour créer un contre-champ.

Dans des modes de réalisation particuliers de l'invention, les moyens d'accroche présentent un élément mâle apte à s'accoupler avec un élément femelle présenté par les moyens d'accroche complémentaire.

Dans d'autres modes de réalisation particuliers de l'invention, les moyens d'accroche complémentaire présentent un élément mâle apte à s'accoupler avec un élément femelle présenté par les moyens d'accroche.

Dans des modes de réalisation particuliers de l'invention, l'élément femelle comprend un évidement de forme circulaire ou oblongue.

Dans le cas d'un évidement de forme oblongue, la longueur de l'évidement peut être orientée avantageusement, selon l'axe de déplacement principal du véhicule, selon un axe perpendiculaire ou selon tout autre angle avantageux, par exemple 10°, 30°, 45°, 60°, 80° par rapport à l'axe de déplacement. L'orientation de la forme oblongue permet d'augmenter le degré de liberté des moyens d'accroche entre véhicules afin de pallier aux irrégularités du sol.

Dans des modes de réalisation particuliers de l'invention, l'élément femelle comprend un évidement de forme oblongue, dans la longueur est orientée perpendiculairement à l'axe de déplacement principal dudit véhicule.

Ainsi, il est possible d'accoupler deux véhicules malgré des aspérités du terrain sur lequel reposent les deux véhicules, tel qu'une pente.

Dans des modes de réalisation particuliers de l'invention, les moyens d'accroche et les moyens d'accroche complémentaire comprennent chacun des moyens de connexion électrique complémentaires, aptes à connecter électriquement ledit véhicule avec le deuxième véhicule ou avec la borne.

Ainsi, un circuit de charge peut être mis en place, connectant les bicyclettes, ou les trottinettes, accouplées entre elles.

Il convient de souligner que le circuit de charge peut être réalisé par l'intermédiaire d'un jeu d'accouplement, le jeu d'accouplement comprenant au moins deux paires de connecteurs électriques complémentaires.

Alternativement, le circuit de charge peut également être réalisé par l'intermédiaire de deux jeux d'accouplements, chaque jeu comprenant au moins une paire de connecteurs électriques complémentaires.

Dans des modes de réalisation particuliers de l'invention, le véhicule comprend également des moyens d'identification dudit véhicule et des moyens de communication de l'identification dudit véhicule à un véhicule similaire.

Dans des modes de réalisation particuliers de l'invention, les moyens de communication de l'identification dudit véhicule comprennent un tag selon la norme NFC (acronyme du terme anglais « Near Field Communication »), le tag étant compris dans les moyens d'accroche complémentaire, et dans lequel les moyens d'accroche comprennent un lecteur NFC apte à lire le tag NFC du deuxième véhicule.

Selon d'autres exemples non revendiqués, ladite structure est un cadre d'une bicyclette ou d'une trottinette.

Selon un deuxième aspect, l'invention vise également un véhicule comprenant une structure selon l'un quelconque des modes de réalisation précédents.

Dans des modes de réalisation particuliers de l'invention, le véhicule comprend également des moyens de communication sans fil aptes à communiquer avec un véhicule similaire, une borne ou un serveur distant.

Selon d'autres exemples non revendiqués, ledit véhicule est une bicyclette.

Préférentiellement, ledit véhicule est une trottinette.

Avantageusement, la trottinette comprend également un moteur électrique apte à propulser la trottinette et une batterie alimentant ledit moteur électrique.

Selon un troisième aspect, l'invention concerne également une borne comportant des moyens d'accroche complémentaire aptes à recevoir des moyens d'accroche d'un véhicule selon l'un quelconque des modes de réalisation précédents.

Selon un quatrième aspect, l'invention concerne un procédé de rechargement d'une batterie de tout ou partie d'une pluralité de véhicules selon l'un quelconque des modes de réalisation précédents, lesdits véhicules comprenant chacun un module électronique et une batterie électrique alimentant un dispositif d'assistance au pédalage dudit véhicule, lesdits véhicules étant accouplés les uns aux autres, l'ensemble des véhicules accouplés étant appelé stock, le stock étant accouplé à une borne selon le mode de réalisation précédent, la borne étant reliée à une alimentation électrique.

Un tel procédé comprend des étapes de :
- détermination d'un module électronique, dit module maître, parmi les modules électroniques compris dans les véhicules du stock ;
- communication au module maître de la liste des véhicules du stock et de l'état de leur batterie ;
- sélection d'au moins une batterie à charger ;
- communication par le module maître d'une commande au module de chaque véhicule du stock afin de connecter la ou les batterie(s) sélectionnée(s) à un circuit de charge relié à l'alimentation électrique, les autres batteries du stock étant déconnectées ;
- rechargement du ou des batterie(s) sélectionnée(s).

Il convient de souligner que le stock peut également être appelé par le terme anglais « stack » par analogie à l'empilement formé par les véhicules du stock.

Dans des modes de mise en œuvre particuliers de l'invention, la sélection de la ou des batterie(s) à charger est restreinte à un nombre prédéterminé, ladite sélection comprenant la ou les batterie(s) ayant un niveau de charge inférieur à un seuil prédéterminé, parmi les batteries des véhicules connectés à une distance prédéterminée de l'extrémité libre du stock.

Dans des modes de mise en œuvre particuliers de l'invention, la borne comprend un module électronique et le module maître est déterminé parmi les modules électroniques compris dans les véhicules du stock ou dans la borne.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédé objets de la présente invention, en regard des dessins annexés, dans lesquels :
- la figure 1 représente une vue d'un véhicule comprenant une structure selon d'autres exemples non revendiqués ;
- la figure 2 est une vue du stockage de véhicule de la figure 1 ;
- la figure 3 est une vue schématique en coupe du stockage de véhicule de la figure 2, illustrant les moyens d'accouplement entre deux véhicules ;
- la figure 3B est un schéma électrique simplifié du stockage de véhicule de la figure 2 ;
- la figure 4 est une vue de dessus d'un stock de véhicules de la figure 1 ;
- la figure 5 est un schéma synoptique d'un procédé de rechargement de tout ou partie du stock de la figure 4 ;
- la figure 6 est une vue en perspective d'un véhicule comprenant un autre exemple de structure selon l'invention ;
- la figure 7 est une vue de dessus du véhicule de la figure 6 ;
- la figure 8 est une vue de dessus de deux véhicules de la figure 6 ;
- la figure 9 est une vue en perspective d'un stock de véhicules de la figure 6.

### DESCRIPTION DÉTAILLÉE DE MODES DE RÉALISATION DE L'INVENTION

On note, dès à présent, que les figures ne sont pas à l'échelle.

### Exemple d'un mode de réalisation particulier de l'invention

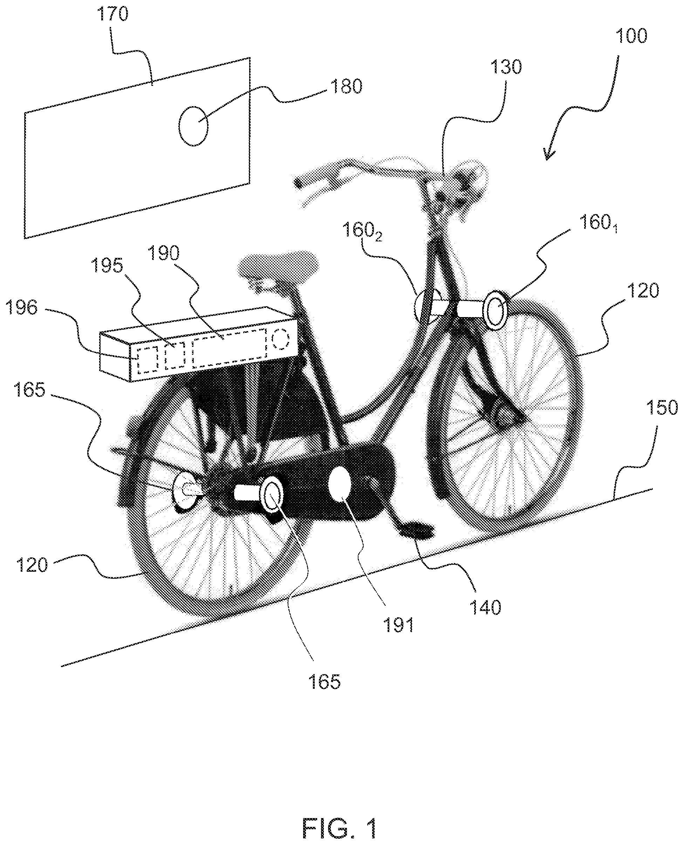

La figure 1 représente un véhicule 100 à propulsion humaine, couramment connu sous le nom de bicyclette. Le véhicule 100 comprenant notamment un cadre tubulaire 110, deux roues 120, un guidon 130 et un pédalier 140, est appelé dans la suite de la description bicyclette 100. La structure du véhicule 100 est par conséquent dans le présent exemple non limitatif de l'invention le cadre 110 de la bicyclette 100.

Il convient de souligner que la bicyclette 100 se déplace selon un axe longitudinal 150 lorsque les roues 120 sont parallèles.

Le cadre de la bicyclette 100 est sensiblement symétrique par rapport à un plan médian 151 parallèle à l'axe longitudinal 150, le plan médian 151 comprenant généralement les deux roues 120 lorsqu'elles sont parallèles.

La bicyclette 100 présente latéralement de chaque côté, déportées d'une distance définie par rapport au plan médian 151, une zone 160 d'accroche avant et une zone 165 d'accroche situé à l'arrière de la bicyclette 100.

Il convient de souligner que la zone 160₁ d'accroche, d'un côté de la bicyclette 100, est avantageusement complémentaire de la zone 160₂ d'accroche, de l'autre côté de la bicyclette 100.

En d'autres termes, la bicyclette 100 comprend deux jeux d'accouplement, un à l'avant de la bicyclette 100 et l'autre à l'arrière de la bicyclette 100, le jeu d'accouplement avant comprenant une zone 160₁ d'accroche et une zone 160₂ d'accroche complémentaire, le jeu d'accouplement arrière comprenant un zone 165₁ d'accroche et une zone 165₂ d'accroche complémentaire.

Dans des variantes de ce mode de réalisation particulier de l'invention, la bicyclette 100 comprend qu'un seul jeu d'accouplement, préférentiellement à proximité de l'avant de la bicyclette 100, comprenant une zone d'accroche et une zone d'accroche complémentaire.

Dans le présent exemple non limitatif de l'invention, les deux zones 160 d'accroche avant sont sensiblement à l'aplomb de l'axe de rotation de la roue avant 120_{A}, tandis que les deux zones 165 d'accroche arrière sont sensiblement dans l'axe de rotation de la roue arrière 120B.

Les zones 160, 165 permettent de maintenir la bicyclette 100 à un dispositif 170 présentant au moins une zone 180 d'accroche complémentaire à une des zones 160 ou 165. Le maintien de la bicyclette 100 au dispositif 170 est généralement effectué en utilisant une force d'attraction magnétique, par la présence d'un aimant permanent ou non. Un électroaimant peut être prévu pour créer une contre-force magnétique afin de détacher plus facilement la bicyclette 100.

Afin de déclencher l'électroaimant, un dispositif indiquant la préhension de la bicyclette 100 par un utilisateur peut avantageusement être compris dans la bicyclette 100. Ce dispositif de détection de la préhension peut être par exemple placé au niveau du guidon 130 de la bicyclette 100 afin de détecter par l'intermédiaire d'un accéléromètre un mouvement du guidon 130.

Le dispositif 170 peut notamment être une borne fixe ou une autre bicyclette similaire, voire identique, à la bicyclette 100.

En effet, les zones 160 et 165 d'accroche présentes d'un côté, par exemple du côté gauche de la bicyclette 100, ont une forme et/ou une polarité complémentaire aux zones 160 et 165 d'accroche en regard, de l'autre côté, par exemple du côté droit de la bicyclette 100.

Il convient de souligner que deux zones 160 d'accroche et les deux zones 165 d'accroche sont positionnées latéralement dans un plan perpendiculaire à l'axe longitudinal 150, afin de permettre un stockage des bicyclettes 100 en ligne perpendiculairement à l'axe 150. Les zones d'accroche 160 et 165 présentent généralement une face plane parallèle à l'axe longitudinal 150, chaque face plane étant apte à venir au contact d'une face plane présentée par la zone d'accroche 180.

Avantageusement, la distance entre la zone d'accroche 160₁ et la zone d'accroche complémentaire 160₂ est inférieure à l'envergure de la bicyclette 100, l'envergure correspondant ici à la distance entre les extrémités du guidon 130, mais supérieure à la largeur du pédalier 140.

Il convient de souligner que la distance entre les zones d'accroche 165 à l'arrière de la bicyclette 100 est sensiblement égale à la distance entre les zones d'accroche 160 situés à l'avant de la bicyclette 100. Ainsi, deux bicyclettes 100 accouplées entre elles sont parallèles.

La bicyclette 100 comprend également une batterie 190 reliée à un dispositif électrique d'assistance au pédalage 191, et un module 195 électronique comportant un microprocesseur, une mémoire informatique et un dispositif de communication sans fil 196. Le dispositif de communication sans fil 196 est basé par exemple sur un protocole Wi-Fi, sur un protocole Bluetooth Low Energy^{®} (BLE), ou sur tout autre protocole bien connu de l'homme du métier. Le module 195 électronique peut également être appelé microcontrôleur.

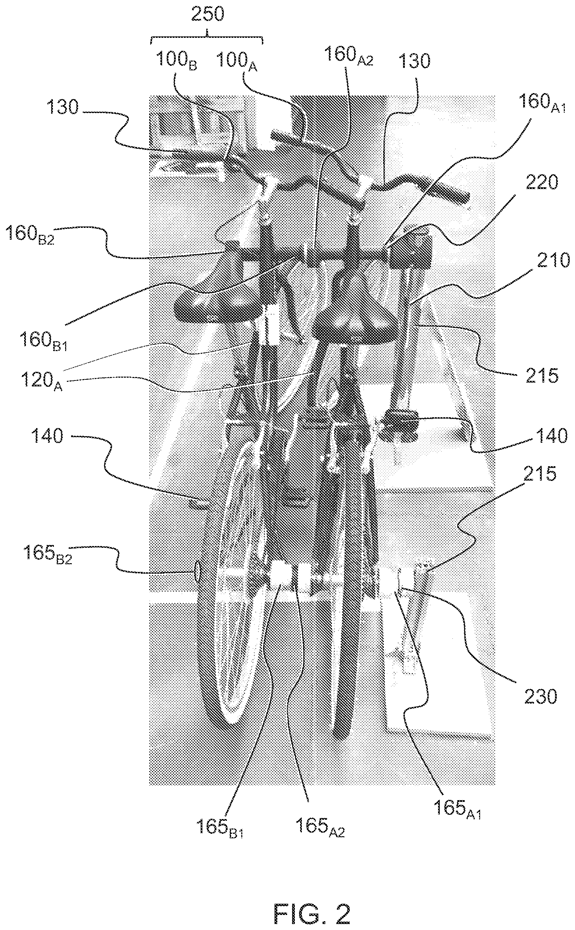

La figure 2 illustre le stockage de deux bicyclettes 100 à une borne 210 comprenant deux mâts 215.

La borne 210 présente une zone 220 sur laquelle est maintenue par aimantation à la zone 160_{A1} du côté droit de la première bicyclette 100_{A} et une zone 230 sur laquelle est maintenue par aimantation à la zone 165_{A1} du côté droit de la première bicyclette 100_{A}.

Dans des variantes de ce mode de réalisation particulier de l'invention, la borne 210 comprend également un module électronique comportant un microprocesseur, une mémoire informatique et un dispositif de communication sans fil. Le module électronique de la borne est généralement similaire au module électronique 195 de la bicyclette 100.

La deuxième bicyclette 100_{B} est ensuite positionnée sur la première bicyclette 100. Pour maintenir la deuxième bicyclette 100_{B} à la première bicyclette 100_{A}, la zone d'accroche 160_{B1} du côté droit de la deuxième bicyclette 100_{B} est maintenue par aimantation à la zone 160_{A2} du côté gauche de la première bicyclette 100_{A}. Pour garantir le parallélisme des deux bicyclettes 100, la zone d'accroche 165_{B1} du côté droit de la deuxième bicyclette 100_{B} est maintenue par aimantation à la zone 165_{A2} du côté gauche de la première bicyclette 100_{A}.

Les zones d'accroche 160_{B2} 165_{B2} à gauche de la bicyclette 100 sont libres pour l'accrochage d'une autre bicyclette.

Il est ainsi possible de créer un stock 250 de bicyclettes 100 qui soit arrangé de manière compacte et dense. Par ce système, il est ainsi possible de stocker une pluralité de bicyclettes 100 en espaçant les bicyclettes 100 avec un pas de l'ordre de vingt-cinq centimètres. Le pas d'espacement est généralement configuré pour permettre de placer deux bicyclettes 100 côte à côte en laissant de l'espace suffisant afin que les pédaliers 140 puissent tourner librement.

Il convient de souligner que les guidons 130, et par conséquent les roues avants 120_{A}, sont avantageusement tournés afin de ne pas rentrer en collision les uns avec les autres, participant ainsi à la compacité du stockage.

Il convient également de souligner que les zones d'accroche 160, 165 sont généralement excentrées latéralement par rapport au cadre 110 et que la distance entre chaque extrémité latérale des zones d'accroche 160 ou des zones d'accroche 165 est configurée en fonction du pas d'espacement entre chaque bicyclette 100.

Les zones d'accroches 165 arrières offrent généralement plus de degrés de libertés que les zones d'accroches 160 avant afin de permettre de compenser les aspérités ou une éventuelle inclinaison du sol sur lequel repose les bicyclettes 100.

Chaque zone d'accroche 165 arrière peut par exemple présenter un plan venant en contact avec un plan d'une autre zone d'accroche 165, l'accouplement des deux plans n'étant pas contraint selon une direction latérale, notamment selon une direction sensiblement verticale.

Un utilisateur souhaitant utiliser une bicyclette 100 du stock 250, prend la première bicyclette 100 disponible, à savoir celle qui est à l'opposé à la borne 210.

Dans des variantes de ce mode de réalisation particulier de l'invention, la borne 210 présente des zones d'accroche avant 160 et arrière 165 de chaque côté des mâts 215 afin de pouvoir stocker des bicyclettes 100 de part et d'autre de la borne 210 et permettre de retirer facilement deux bicyclettes 100.

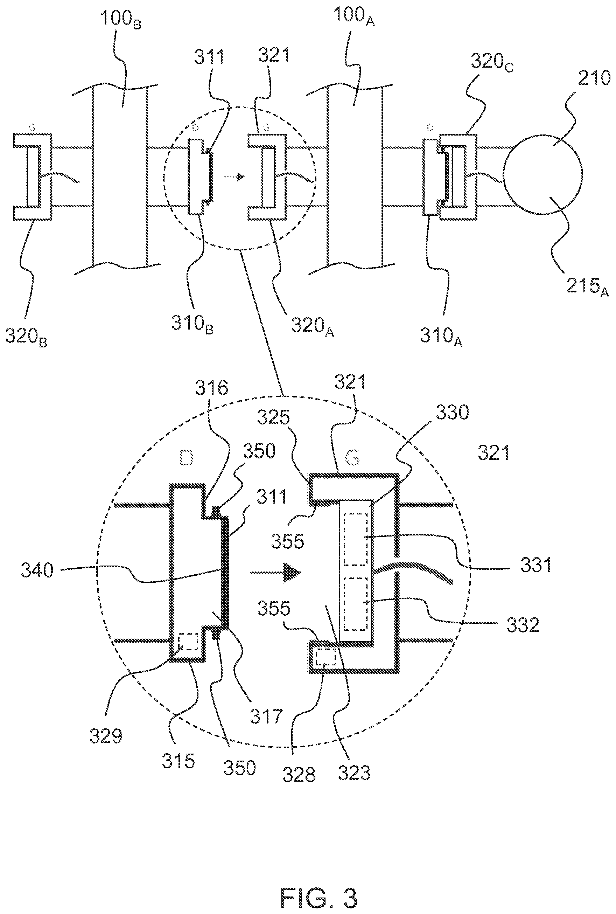

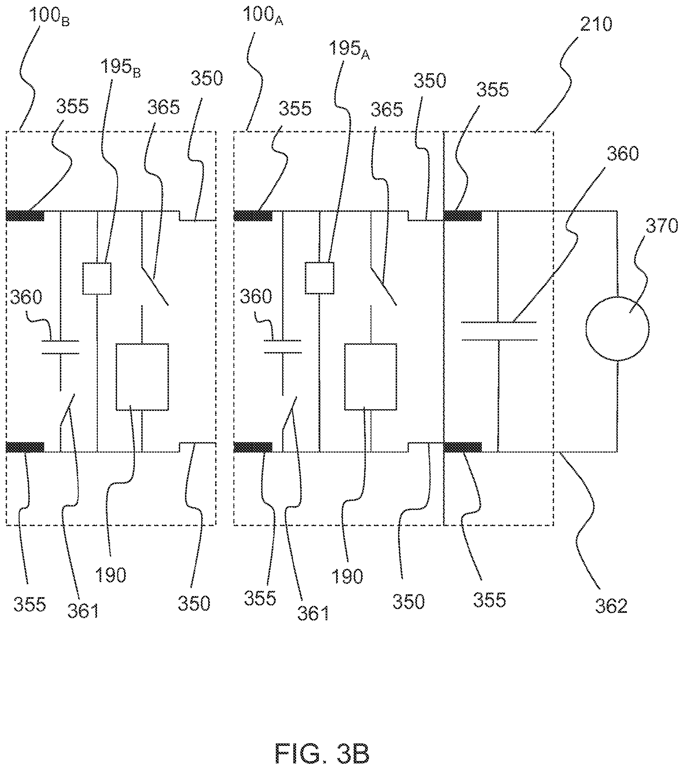

La figure 3 est une vue schématique représentant en détail un exemple de mécanisme d'accouplement entre deux zones d'accroches avant 160, à savoir entre une zone d'accroche 310 et une zone d'accroche complémentaire 320.

La figure 3 présente ainsi une borne 210 et deux bicyclettes identiques 100. La bicyclette 100_{A} est accouplée à la borne 210 par l'intermédiaire d'une zone d'accroche avant 310_{A}, située dans le présent exemple non limitatif de l'invention à droite de la bicyclette 100_{A}, et d'une zone d'accroche complémentaire 320c fixée au mât 215_{A} de la borne 210.

La bicyclette 100_{A} comprend également une zone d'accroche complémentaire 320_{A}, située sur son côté gauche, et destinée à être accouplée avec une zone d'accroche 310_{B} de la bicyclette 100_{B}.

Il convient de souligner qu'un dispositif de nature quelconque peut venir s'accoupler au stock 250 dans la mesure où il présente au moins une zone d'accroche 310 ou au moins une zone d'accroche complémentaire 320.

La zone d'accroche 310 présente un élément mâle 311 venant coopérer avec un élément femelle 321 d'une zone d'accroche avant 320.

L'élément mâle 311 de la zone d'accroche 310 est configurée dans le présent exemple non limitatif de l'invention par une pièce cylindrique 315 comprenant un épaulement 316 entourant un bossage cylindrique 317. L'épaulement 316 est destiné à venir en butée sur l'élément femelle 321 qui comprend un évidement de forme oblongue configurant un logement 323 dans lequel vient s'insérer le bossage cylindrique 317 présenté par l'élément mâle 311.

Il convient de souligner que la forme de l'évidement est avantageusement oblongue dans le sens vertical afin de pallier à des irrégularités du sol sur lequel reposent les bicyclettes 100_{A}, 100_{B} et la borne 210, en offrant un degré de liberté vertical, la largeur de la forme oblongue étant sensiblement supérieure au diamètre du bossage 317.

Ainsi, l'élément mâle 311 peut se fixer à différentes hauteurs, avec une liberté verticale de l'ordre de dix millimètres par rapport au centre du logement 323.

Chaque bicyclette 100 comprend une identification inscrite dans un tag NFC (acronyme anglais de « Near Field Communication ») 328 compris dans l'élément femelle 321, ainsi qu'un lecteur NFC 329 compris dans l'élément male 311 apte à lire le tag NFC 328 d'une bicyclette 100 voisine.

Afin de maintenir en contact les deux zones d'accroche 310 et 320, une ventouse électromagnétique 330 fixée au fond du logement 323 coopère avec une plaque 340 d'acier fixée à l'extrémité plane du bossage 317.

Ainsi, lorsque le bossage 317 est inséré dans le logement 323, la zone d'accroche 310 est attirée par la force magnétique exercée par la ventouse magnétique 330 sur la plaque 340.

La ventouse électromagnétique 330 comprend un aimant permanent 331 et une bobine 332 qui, lorsqu'elle est alimentée, crée un contre-champ magnétique réduisant ou neutralisant le champ magnétique de l'aimant 331, afin de permettre de désaccoupler plus facilement deux zones d'accroche 310 et 320.

Il convient de souligner que la ventouse électromagnétique 330 est avantageusement en retrait dans l'élément femelle 321, au lieu d'être placé sur l'élément mâle 311, réduisant ainsi le risque d'aimantation intempestive d'éléments métalliques se trouvant à proximité de la ventouse 330.

Dans des variantes de ce mode de réalisation particulier de l'invention, la ventouse magnétique comprend un aimant permanent et un mécanisme de déplacement de l'aimant entre une position proche et une position éloignée de la surface extérieure 325, la position éloignée conférant une force d'aimantation plus réduite que dans la position proche.

Lorsque les zones d'accroche 310 et 320 sont en contact, l'épaulement 316 est en butée sur la surface extérieure 325, et une connexion électrique est établie entre les deux zones d'accroches 310 et 320 par l'intermédiaire de deux connecteurs 350 radialement en saillie sur le pourtour du bossage 317.

Pour l'établissement de la connexion électrique, les deux connecteurs 350, diamétralement opposés horizontalement, sont en contact de deux plaques 355 présentées par les faces planes verticales du logement 323 de forme oblongue. Ainsi, le contact électrique est assuré quel que soit la hauteur d'accouplement entre les zones d'accroche 310 et 320.

Avantageusement, les connecteurs 350 comprennent un ressort afin d'assurer le contact électrique entre les connecteurs 350 et les plaques 355. Le ressort permet également de rattraper une différence de distance pouvant apparaître si l'axe formé par les deux connecteurs 350 est incliné par rapport à la tangente des plaques 355, ce qui peut être le cas lorsque le sol comprend des aspérités. L'angle maximum admissible est généralement de l'ordre de 5 à 10°.

Il convient de souligner que pour chaque bicyclette 350, chaque connecteur 350 est connecté à une plaque 355 afin de connecter électriquement l'ensemble des bicyclettes 100 du stock 250 en réalisant un circuit électrique, dit circuit de charge, qui est généralement alimenté par une tension de charge continue.

La figure 3B représente un schéma électrique simplifié des bicyclettes 100_{A} et 100_{B} et de la borne 210. Ce schéma électrique comprend le circuit de charge 362 reliant chaque batterie 190 en parallèle.

Afin de connecter ou déconnecter chaque batterie 190 du circuit de charge, un interrupteur 365 relie chaque batterie 190 au circuit de charge 362.

Le circuit de charge 362 est alimenté par une source d'alimentation électrique 370, qui est par exemple un réseau électrique, un générateur électrique ou une batterie électrique, et qui délivre généralement un courant à tension continue. Le circuit de charge 362 se termine par deux plaques 355 libres pour une connexion avec une autre bicyclette 100.

Afin de pouvoir déterminer si la connexion électrique est bien établie lors de l'accouplement, les plaques 355 de chaque zone 320 d'accouplement complémentaire sont connectées entre elles par l'intermédiaire d'un condensateur 360. Il convient de souligner que la tension de charge étant généralement continue, le condensateur 360 ne court-circuite pas le circuit de charge 362.

Lorsque la bicyclette 100_{B} est accouplée à la bicyclette 100_{A}, un signal de tension alternative est émis par le module électronique 195 de la bicyclette 100_{B}, connecté en parallèle au circuit de charge 362, et circule dans le circuit de charge 362 en se superposant à la tension de charge continue.

Il convient de souligner que le module électronique 195 comprend avantageusement des moyens de protection électronique (non représentés sur la figure) évitant que le module électronique 195 ne soit endommagé par le courant de charge circulant dans le circuit 362.

Le signal alternatif circulant à travers le condensateur de la bicyclette 100_{B}, le circuit électrique étant ainsi fermé même si les batteries 190 ne sont pas connectées au circuit de charge 362, le module électronique de la bicyclette 100_{B} a ainsi l'information que le contact électrique est bien effectué entre les deux bicyclettes 100_{A} et 100_{B}. Le module électronique de la bicyclette 100B peut alors envoyer un signal sonore ou visuel à l'extérieur de la bicyclette 100B, visible par un individu.

Il convient de souligner que la circulation du signal alternatif ne nécessite pas que le stock 250 soit connecté à la borne 210 ou que la borne 210 soit reliée à la source d'alimentation électrique 370. En d'autres termes, il est possible de confirmer l'accouplement entre deux bicyclettes 100 sans qu'aucune des bicyclettes ne soit accouplée à la borne 210 ou lorsque la borne 210 n'est pas alimentée en courant par une source d'alimentation.

En outre, afin d'éviter que le module électronique 195 d'une bicyclette 100 n'indique que la bicyclette 100 est accouplée avec une bicyclette 100 similaire ou avec la borne 210 lorsque la bicyclette 100 est libre, un interrupteur 361 est associé au condensateur 360 de chaque bicyclette 100. A cet effet, l'interrupteur 361 est ouvert lorsque la bicyclette 100 est libre. Lorsque la bicyclette 100 est accouplée, par exemple au stock 250, l'interrupteur 361 de ladite bicyclette 100 est fermé dès lors que le module électronique 195 détecte l'accouplement par l'établissement de la connexion électrique avec le stock 250.

Dès lors que l'accouplement de la bicyclette 100_{B} avec la bicyclette 100_{A} est effectué, un signal alternatif envoyé par le module électronique 195_{B} peut circuler dans le circuit électrique fermé par au moins le condensateur 360 de la borne 210 ou de la bicyclette 100_{A}.

Lorsque la connexion électrique est établie successivement entre chaque bicyclette 100 du stock 250, la connexion électrique peut notamment servir à recharger la batterie 190 de tout ou partie des bicyclettes 100 connectées à la borne 210.

Compte-tenu que la borne 210 a généralement une puissance électrique disponible limitée, une stratégie de recharge astucieuse peut être mise en place afin de privilégier le rechargement de la batterie 190 d'une ou plusieurs bicyclettes parmi les bicyclettes 100 accrochées à la borne 210.

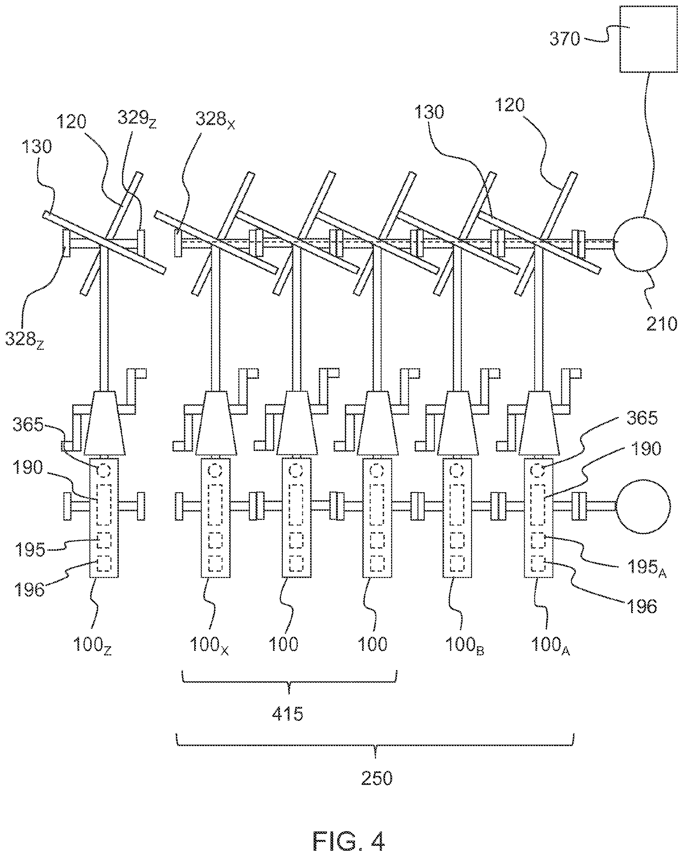

Comme illustré en figure 4, une stratégie de recharge est par exemple de recharger en priorité la bicyclette 100_{X} située à l'extrémité libre du stock 250, voire une pluralité de bicyclettes 100 situées à proximité d'une extrémité libre du stock 250, comprises par exemple dans le lot 415 comprenant les trois bicyclettes situées au bout de l'extrémité libre du stock 250. Parmi le lot 415, il peut être choisi préférentiellement de recharger celles ayant les batteries ayant un niveau d'énergie plus faibles que les autres, ou ayant un niveau d'énergie inférieur à un seuil prédéterminé.

Afin de gérer la stratégie de recharge, le module 195 de la bicyclette 100_{A} accrochée à la borne 210 sert de « maître » et envoie une commande aux modules 195 de chaque bicyclette 100 du stock 250 indiquant soit de connecter ou de déconnecter la batterie 190 de la ligne de charge. A cet effet, un interrupteur électrique 365, apte à être commandé à distance, est inséré dans le circuit électrique reliant la batterie 190 de chaque bicyclette 100 au circuit de charge.

Il convient de souligner que lorsque la bicyclette 100z est accouplée à la bicyclette 100_{X} située à l'extrémité libre du stock 250, le lecteur NFC 329z lit le tag NFC 328x de la bicyclette 100x comprenant la liste des identifiants du stock 250, incluant les bicyclettes 100 et la borne 205, et met à jour le tag NFC 328z en ajoutant à la liste, l'identifiant de la bicyclette 100_{Z}.

La liste peut également comprendre une indication de l'état de la batterie de chaque bicyclette 100

La liste peut ensuite être communiquée au module 195_{A} de la bicyclette 100_{A} « maître » ou à un serveur distant de gestion de la flotte de bicyclettes 100, par l'intermédiaire par exemple d'un dispositif de télécommunication sans fil, comprenant par exemple une antenne 3G, installé soit sur une bicyclette 100 ou soit sur la borne 205.

Lorsque le module 195_{A} de la bicyclette 100_{A} reçoit la liste des bicyclettes 100 et des états de leurs batteries 190, le module 195_{A} traite les données afin de déterminer quelles sont les batteries 190 à charger en priorité afin d'optimiser leur temps de rechargement et permettre à un utilisateur d'avoir plus de chances de pouvoir prendre une bicyclette 100 située à l'extrémité libre du stock 250 et de profiter de l'assistance électrique au pédalage, la batterie 190 de la bicyclette 100 utilisée ayant été préalablement rechargée.

Le module 195_{A} envoie, par l'intermédiaire du dispositif de communication sans fil 425, à chaque bicyclette 100 une commande indiquant l'ouverture ou la fermeture de l'interrupteur 365 de chaque bicyclette 100, afin de connecter uniquement les batteries 190 sélectionnées, en vue de les recharger.

Les batteries 190 sélectionnées, une fois connectées au circuit de charge sont ensuite rechargées.

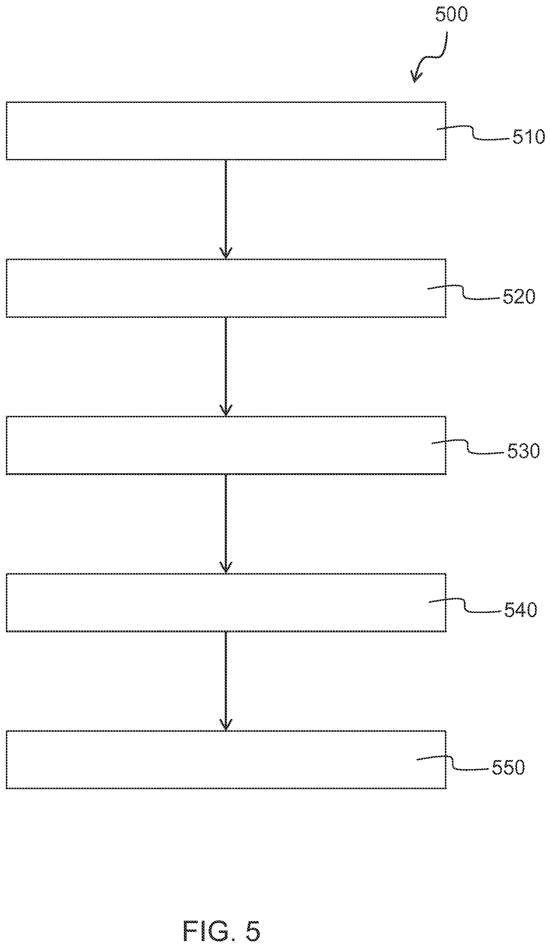

La figure 5 représente sous la forme d'un schéma synoptique le procédé 500 de rechargement d'une batterie 190 de tout ou partie des bicyclettes 100 du stock 250 accouplé à la borne 210.

Le procédé 500 comprend une première étape de détermination 510 d'un module électronique « maître », parmi les bicyclettes 100 du stock 250. Le module électronique « maître » correspond dans le présent exemple non limitatif de l'invention au module électronique 195 de la bicyclette 100_{A}. Le module 195_{A} va ainsi recevoir les informations concernant le stock 250 afin de piloter le rechargement de tout ou partie des batteries 190 du stock 250.

La deuxième étape du procédé 500 est une étape 520 de communication au module 195_{A} « maître » de la liste des bicyclettes 100 du stock 250 et de l'état de leur batterie 190.

A partir de cette liste, une sélection d'au moins une batterie 190 à charger est effectuée, au cours d'une troisième étape 530 à partir de l'état de charge des batteries 190 et de leur proximité de l'extrémité libre du stock 250.

Dans le présent exemple non limitatif de l'invention, la sélection comprend deux batteries 190 ayant un niveau de charge inférieur à un seuil prédéterminé, parmi les batteries du lot 415.

A partir de la liste des batteries sélectionnées, une commande est ensuite communiquée par le module 195_{A} de la bicyclette 100_{A} à chaque bicyclette 100 du stock 250 au cours d'une quatrième étape 540. La commande communiquée à une bicyclette 100 donnée indique si la batterie 190 de ladite bicyclette doit être connectée au circuit de charge 362 ou si elle doit être déconnectée. La commande se traduit par conséquent respectivement par la fermeture ou par l'ouverture de l'interrupteur 365 associée à ladite batterie 190.

Les batteries 190 sélectionnées sont ensuite rechargées au cours de la cinquième étape 550.

### Autre exemple de mode de réalisation de l'invention

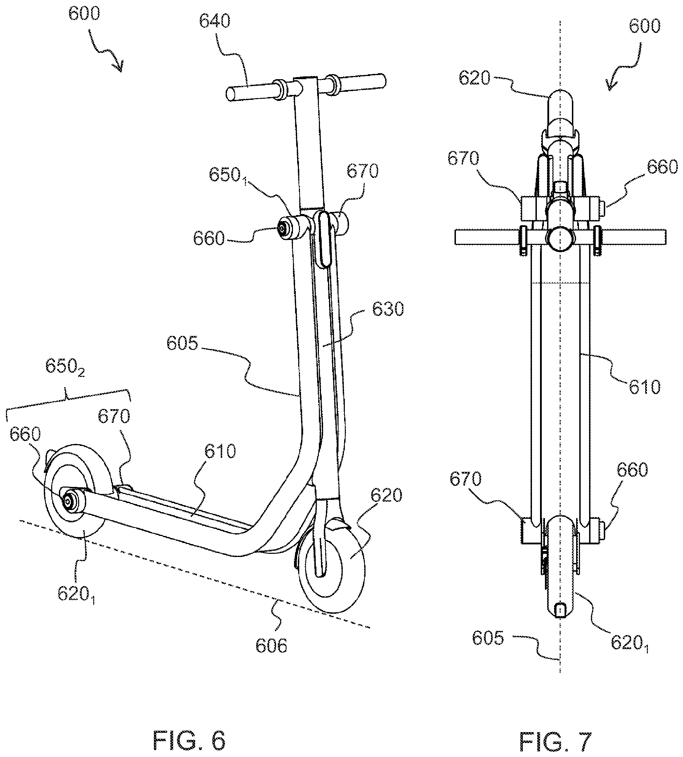

Les figures 6 et 7 illustrent une structure 605 d'une trottinette 600 selon l'invention, respectivement selon une vue en perspective et une vue du dessus.

La structure 605, couramment appelée par le terme anglais « *deck* », comprend un plateau 610 et une potence 630.

Afin de former la trottinette 600, la structure 605 est assemblée avec deux roues 620 et un guidon 640.

Comme on peut le voir sur la figure 7, il convient de souligner que la structure 605 de la trottinette 600 est sensiblement symétrique selon un plan médian longitudinal 605. Le plan médian longitudinal 605 est généralement vertical lorsque la trottinette 600 est propulsée selon l'axe de déplacement 606 usuel, correspondant aux roues 620 parallèles.

Afin de pouvoir former un stockage compact, la structure 605 de la trottinette 600 comprend deux jeux 650 d'accouplement, l'un 650₁ fixé à la potence 630 et l'autre 650₂ fixé au plateau 610, à proximité de la roue arrière 620₁.

Chaque jeu 650 d'accouplement comprend des moyens d'accroche et des moyens d'accroche complémentaire, disposés de part et d'autre du plan médian longitudinal 605 de la trottinette 600 afin que deux trottinettes 600 puissent s'accoupler ensemble.

A cet effet, les moyens d'accroche de chaque jeu 650 d'accouplement comprennent une zone d'accroche 660 présentant un élément mâle venant coopérer avec un élément femelle complémentaire d'une zone d'accroche 670 comprise dans les moyens d'accroche complémentaire.

Les zones d'accroche 660 et 670 sont similaires, voire identiques, aux zones d'accroche 310 et 320 du mode de réalisation précédent, présentées notamment en figure 3.

Il convient de souligner que l'orientation de la forme oblongue présentée par l'élément femelle de la zone d'accroche 670 peut être choisie pour offrir plus de liberté de mouvement au moment de l'accouplement de deux trottinettes 600, et rattraper ainsi des aspérités du sol.

Préférentiellement, la forme oblongue est orientée sur le jeu 650₁ d'accouplement situé à l'avant, sensiblement selon l'axe de la potence 630, afin d'offrir un degré de liberté selon un axe sensiblement vertical.

Dans des variantes de ce mode de réalisation particulier de l'invention, l'élément femelle de la zone d'accroche 670 a une forme circulaire dont le diamètre est plus grand que le diamètre de l'élément mâle afin d'offrir des degrés de liberté au moment de l'accouplement.

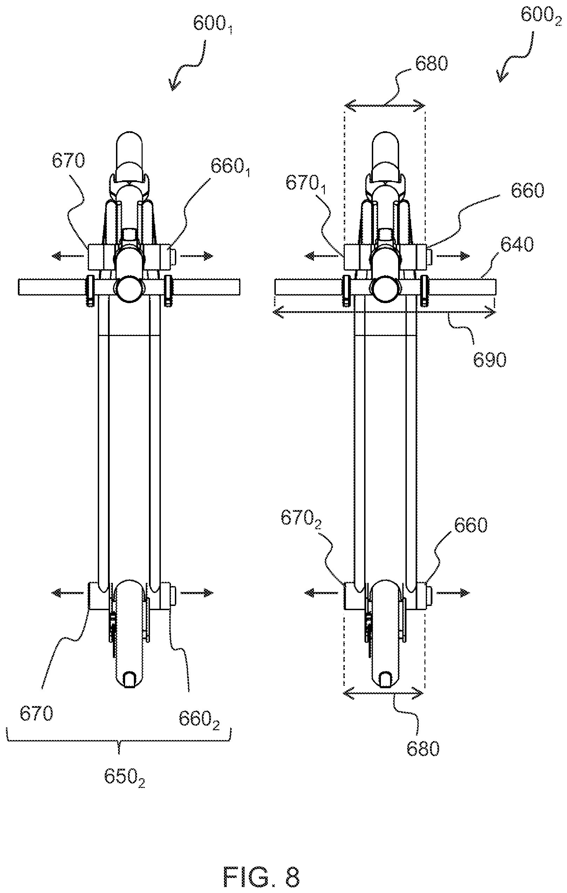

Comme illustré en figure 8, la distance 680 entre les zones d'accroche 660 et 670 d'un même jeu d'accouplement est inférieur à l'envergure de la trottinette 600, ici représentée par la flèche 690. L'envergure correspond ici à la distance 690 entre les deux extrémités du guidon 640.

En outre, les deux jeux d'accouplement de la même trottinette 600 présentent avantageusement, dans le présent exemple non limitatif de l'invention, la même distance 680 entre les zones d'accroche 660 et 670 afin que deux trottinettes 600 accouplées soient parallèles l'une par rapport à l'autre.

Il convient de souligner que les faces extérieures des zones d'accroche 660 et 670 d'un même jeu d'accouplement sont généralement parallèles l'une par rapport à l'autre. On entend par face extérieure les surfaces de chaque zone d'accroche destiné à venir en contact. En se référant à la figure 3, les faces extérieures correspondent ici à l'épaulement 316 et à la surface extérieure 325.

Par ailleurs, les zones d'accroche 660 et 670, étant disposés de part et d'autre de la trottinette 600 sont orientées vers l'extérieur, en sens opposé l'une par rapport à l'autre de sorte à pouvoir être chacune accouplées avec une zone complémentaire d'un jeu d'accouplement d'une deuxième trottinette 600 placée en regard.

Dans le cas présent illustré en figure 8, les zones d'accroche 660₁ et 660₂ de la trottinette 600₁ sont placées en regard respectivement des zones d'accroche complémentaire 670₁ et 670₂ de la trottinette 600₂ en vue d'accoupler les deux trottinettes 600₁ et 600₂.

En outre, les faces extérieures des jeux d'accouplement de la même trottinette 600 sont généralement parallèles. Dans le présent exemple non limitatif de l'invention, elles sont également dans le même plan.

Avantageusement, l'un des deux jeux 650 d'accouplements, préférentiellement le jeu 650₂, situé à l'arrière de la trottinette 600, peut présenter deux surfaces planes aptes à glisser l'une contre l'autre afin d'offrir plus de degrés de libertés à l'accouplement.

La zone d'accroche 660 d'au moins un jeu d'accouplement 650 peut comprendre une ventouse électromagnétique, semblable à la ventouse électromagnétique 330 de la figure 3, coopérant avec un élément métallique présenté par la zone d'accroche 670 complémentaire, afin de maintenir ensemble deux trottinettes 600 par l'intermédiaire d'une force magnétique qui peut être réduite, voire neutraliser, pour désaccoupler plus facilement les zones d'accroche 660 et 670 de deux jeux d'accouplement.

Afin de pouvoir être identifié, chaque trottinette 600 comprend un tag NFC et un lecteur de tag NFC, de manière similaire au mode de réalisation précédent.

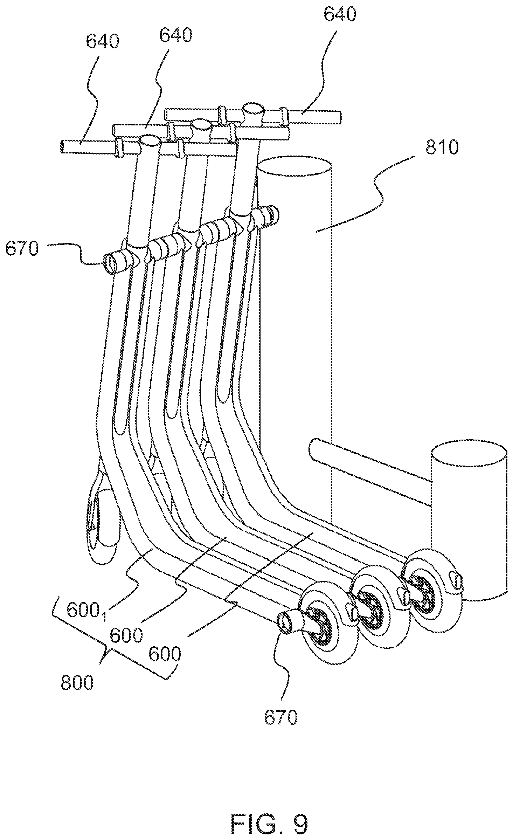

Une vue en perspective d'un ensemble de trottinettes 600 est présentée en figure 9. Cet ensemble 800 de trottinettes 600, appelé « stock », est connecté à une borne 810.

Le stock 800 comprend ici trois trottinettes 600 accouplées deux à deux, la trottinette 600₁ à l'extrémité du stock 800 étant accouplée à la borne 810.

Compte-tenu que la distance entre chaque extrémité du même jeu d'accouplement 650 est inférieure à l'envergure de la trottinette 600, il est nécessaire de tourner le guidon 640 de chaque trottinette afin que les trottinettes 600 puissent s'accoupler ensemble. Le stockage est par conséquent plus compact que le stockage de l'art antérieur où chaque trottinette est positionnée dans un logement dédié.

Par ailleurs, afin d'avoir un stock 800 plus stable mécaniquement, évitant ainsi les chutes et/ou les désaccouplements inopinés, le jeu d'accouplement 650₁ fixé à la potence 630 est à une distance non nulle du plateau 610. Préférentiellement, les deux jeux d'accouplement 650 sont sensiblement à égale distance de la roue avant 620₂.

Le stock 800 présente sur la figure 8 deux zones d'accroche complémentaire 670 libre afin qu'une quatrième trottinette (non représentée) puisse s'accoupler à la trottinette 600₁ située à l'extrémité libre du stock 800.

Il convient de souligner que la trottinette 600 peut également comprendre un moteur électrique (non représenté sur la figure) alimenté par une batterie (non représentée sur la figure) afin de propulser la trottinette 600.

Auquel cas, les zones d'accroche 660 et 670 peuvent également comprendre des moyens de connexion électrique pour créer une connexion électrique entre deux trottinettes 600 accouplées l'une à l'autre. Les moyens de connexion électrique sont similaires à ceux présentés en figure 3. Le circuit électrique obtenu est également similaire à celui de la figure 3B.

Lorsque la borne 810 est alimentée électriquement afin de recharger tout ou partie des batteries 685 des trottinettes 600, le procédé 500 de rechargement illustré en figure 5 s'applique également dans le présent exemple non limitatif de l'invention.

## Revendications

1. Structure (605) d'une trottinette (600), comprenant un plateau (610) et une potence (630), dans laquelle ladite structure comprend au moins un jeu d'accouplement (650) comprenant des moyens d'accroche (660) et des moyens d'accroche complémentaire (670), les moyens d'accroche étant aptes à s'accoupler à des moyens d'accroche complémentaire présentés par une structure similaire d'une deuxième trottinette (600), **caractérisée en ce que**
les moyens d'accroche et les moyens d'accroche complémentaire d'un même jeu d'accouplement étant positionnés latéralement dans un plan perpendiculaire à l'axe (606) de déplacement principal de ladite trottinette, de part et d'autre de ladite trottinette, et la structure comprend deux jeux d'accouplement (650), l'un desdits deux jeux étant situé sensiblement dans le plan du plateau, l'autre étant situé le long de la potence, et **en ce que** la distance entre les moyens d'accroche et les moyens d'accroche complémentaire d'un même jeu d'accouplement est inférieure à l'envergure de ladite trottinette.

2. Structure selon la revendication 1, dans laquelle les moyens d'accroche complémentaire comprennent au moins un aimant permanent (331) coopérant avec au moins un élément métallique (340) présenté par les moyens d'accroche.

3. Structure selon la revendication 2, dans laquelle les moyens d'accroche complémentaire comprennent également un électroaimant (332) apte à créer un champ magnétique opposé au champ magnétique de l'aimant permanent.

4. Structure selon l'une quelconque des revendications 1 à 3, dans laquelle les moyens d'accroche présentent un élément mâle (311) apte à s'accoupler avec un élément femelle (321) présenté par les moyens d'accroche complémentaire.

5. Structure selon la revendication 4, dans laquelle l'élément femelle comprend un évidement de forme circulaire ou oblongue.

6. Structure selon l'une quelconque des revendications 1 à 5, dans laquelle les moyens d'accroche et les moyens d'accroche complémentaire comprennent chacun des moyens de connexion électrique complémentaires (350, 355), aptes à connecter électriquement ladite trottinette avec ladite deuxième trottinette ou avec une borne.

7. Structure selon l'une quelconque des revendications 1 à 6, comprenant également des moyens d'identification de ladite trottinette et des moyens de communication de l'identification de ladite trottinette à une trottinette similaire.

8. Structure selon la revendication 7, dans laquelle les moyens de communication de l'identification de ladite trottinette comprennent un tag (328) selon la norme NFC (acronyme du terme anglais « Near Field Communication »), le tag étant compris dans les moyens d'accroche complémentaire, et dans lequel les moyens d'accroche comprennent un lecteur (329) NFC apte à lire le tag NFC de ladite deuxième trottinette.

9. Trottinette (600) **caractérisé en ce qu'**elle comprend une structure selon l'une quelconque des revendications 1 à 8.

10. Trottinette selon la revendication 9, comprenant également des moyens de communication sans fil aptes à communiquer avec une trottinette similaire, une borne (800) ou un serveur distant.

11. Trottinette selon l'une quelconque des revendications 9 à 10, **caractérisée en ce qu'**elle comprend un moteur électrique apte à propulser la trottinette et une batterie alimentant ledit moteur électrique.

## Patentansprüche

1. Struktur (605) eines Rollers (600), umfassend eine Plattform (610) und eine Lenkstange (630), wobei die Struktur mindestens einen Kupplungssatz (650) umfasst, der Befestigungsmittel (660) und komplementäre Befestigungsmittel (670) umfasst, wobei die Befestigungsmittel geeignet sind, sich mit komplementären Befestigungsmitteln zu koppeln, die von einer gleichartigen Struktur eines zweiten Rollers (600) bereitgestellt werden,
**dadurch gekennzeichnet, dass** die Befestigungsmittel und die komplementären Befestigungsmittel eines gleichen Kupplungssatzes seitlich in einer Ebene senkrecht zur Hauptbewegungsachse (606) des Rollers auf beiden Seiten des Rollers positioniert sind, und die Struktur zwei Kupplungssätze (650) umfasst, wobei einer der zwei Sätze im Wesentlichen in der Ebene der Plattform angeordnet ist, der andere entlang der Lenkstange angeordnet ist, **und dadurch, dass** der Abstand zwischen den Befestigungsmitteln und den komplementären Befestigungsmitteln eines gleichen Kupplungssatzes geringer ist als die Breite des Rollers.

2. Struktur nach Anspruch 1, wobei die komplementären Befestigungsmittel mindestens einen Permanentmagneten (331) umfassen, der mit mindestens einem metallischen Element (340) zusammenwirkt, das die Befestigungsmittel aufweisen.

3. Struktur nach Anspruch 2, wobei die komplementären Befestigungsmittel auch einen Elektromagneten (332) umfassen, der geeignet ist, ein Magnetfeld zu erzeugen, das dem Magnetfeld des Permanentmagneten entgegengesetzt ist.

4. Struktur nach einem der Ansprüche 1 bis 3, wobei die Befestigungsmittel ein männliches Element (311) aufweisen, das geeignet ist, sich mit einem weiblichen Element (321) zu koppeln, das die komplementären Befestigungsmittel aufweisen.

5. Struktur nach Anspruch 4, wobei das weibliche Element eine Aussparung mit kreisförmiger oder länglicher Form umfasst.

6. Struktur nach einem der Ansprüche 1 bis 5, wobei die Befestigungsmittel und die komplementären Befestigungsmittel jeweils komplementäre elektrische Verbindungsmittel (350, 355) umfassen, die geeignet sind, den Roller elektrisch mit dem zweiten Roller oder mit einer Ladestation zu verbinden.

7. Struktur nach einem der Ansprüche 1 bis 6, auch umfassend Mittel zur Identifikation des Rollers und Kommunikationsmittel der Identifikation des Rollers an einen gleichartigen Roller.

8. Struktur nach Anspruch 7, wobei die Kommunikationsmittel der Identifikation des Rollers einen Tag (328) nach der NFC-Norm (Akronym des englischen Begriffs "Near Field Communication") umfassen, wobei der Tag in den komplementären Befestigungsmitteln enthalten ist, und wobei die Befestigungsmittel einen NFC-Leser (329) umfassen, der geeignet ist, den NFC-Tag des zweiten Rollers zu lesen.

9. Roller (600), **dadurch gekennzeichnet, dass** er eine Struktur nach einem der Ansprüche 1 bis 8 umfasst.

10. Roller nach Anspruch 9, auch umfassend drahtlose Kommunikationsmittel, die geeignet sind, mit einem gleichartigen Roller, einer Ladestation (800) oder einem entfernten Server zu kommunizieren.

11. Roller nach einem der Ansprüche 9 bis 10,
**dadurch gekennzeichnet, dass** er einen Elektromotor, der geeignet ist, den Roller anzutreiben, und eine Batterie, die den Elektromotor speist, umfasst.

## Claims

1. Structure (605) of a scooter (600), comprising a platform (610) and a stem (630), said structure comprising at least one coupling set (650) comprising attachment means (660) and complementary attachment means (670), the attachment means being capable of being coupled to complementary attachment means borne by a similar structure of a second scooter (600),
**characterized in that** the attachment means and the complementary attachment means of the same coupling set are positioned laterally in a plane perpendicular to the main movement axis (606) of said scooter, on either side of said scooter, and the structure comprises two coupling sets (650), one of said two sets being located substantially in the plane of the platform, the other being located along the stem, and **in that** the distance between the attachment means and the complementary attachment means of the same coupling set is less than the span of said scooter.

2. Structure according to claim 1, wherein the complementary attachment means comprise at least one permanent magnet (331) engaging with at least one metal element (340) borne by the attachment means.

3. Structure according to claim 2, wherein the complementary attachment means also comprise an electromagnet (332) capable of creating a magnetic field opposite to the magnetic field of the permanent magnet.

4. Structure according to any one of claims 1 to 3, wherein the attachment means bear a male element (311) capable of being coupled with a female element (321) borne by the complementary attachment means.

5. Structure according to claim 4, wherein the female element comprises a circular or oblong recess.

6. Structure according to any one of claims 1 to 5, wherein the attachment means and the complementary attachment means each comprise complementary electrical-connection means (350, 355) capable of electrically connecting said scooter with said second scooter or with a terminal.

7. Structure according to any one of claims 1 to 6, also comprising means for identifying said scooter and means for communicating the identification of said scooter to a similar scooter.

8. Structure according to claim 7, wherein the means for communicating the identification of said scooter comprise a tag (328) according to the NFC (near field communication) standard, the tag being included in the complementary attachment means, and wherein the attachment means comprise an NFC reader (329) capable of reading the NFC tag of said second scooter.

9. Scooter (600), **characterized in that** it comprises a structure according to any one of claims 1 to 8.

10. Scooter according to claim 9, also comprising wireless communication means capable of communicating with a similar scooter, a terminal (800) or a remote server.

11. Scooter according to either one of claims 9 and 10, **characterized in that** it comprises an electric motor capable of propelling the scooter and a battery powering said electric motor.
